# EUROPEAN PATENT SPECIFICATION

(11) **EP 0 829 397 B1**
(45) Date of publication and mention of the grant of the patent: **13.02.2002**
(21) Application number: 97307054.3
(22) Date of filing: 11.09.1997
(51) Int. Cl.: B60R 21/20

(54) **Simplified passenger airbag module using the inflator as a structural member**
Vereinfachtes Insassen- Airbagmodul, das den Gasgenerator als Strukurelement benutzt
Module à coussin gonflable pour passager utilisant le gonfleur comme élément de structure

(30) Priority: 16.09.1996 US 715278; 18.04.1997 US 844347
(43) Date of publication of application: 18.03.1998
(73) Proprietor: Autoliv ASP, Inc., Ogden, Utah 84405-1563 (US)
(72) Inventor: Rose, Larry D., Layton, Utah 84041 (US); Paxton, Donald J., Romeo, Michigan 48065 (US)
(74) Representative: Johnstone, Douglas Ian

(56) References cited:
- EP-A- 0 627 342
- US-A- 4 191 392
- US-A- 5 458 364

## Description

This invention is a simplified airbag module housing which is useful in motor vehicle inflatable restraint systems and is particularly suited for stamped steel construction. The invention is a low cost, unique airbag module that requires only one fastener to complete the assembly, and reduces the total number of module parts to six (6), excluding a decorative cover.

Motor vehicle inflatable restraint systems typically include a crash sensor suitably mounted on the vehicle frame and an airbag system or assembly positioned within the vehicle passenger compartment. The airbag assembly generally includes an inflatable cushion and a gas generator, which, respectively, are commonly called an airbag and an inflator. The inflator is a type responsive to a control signal produced by the crash sensor and provides gas to inflate and deploy the airbag upon a sudden vehicular deceleration, sensed by the crash sensor, that is indicative of the onset of a crash.

Also included in the airbag assembly is an outer reaction canister or module housing in which the airbag and inflator are contained. The module housing is a structurally sound member which supports the weight of the folded airbag and the inflator and absorbs and retransmits the airbag deployment forces to the vehicle.

The airbag typically has a section that defines a gas inlet opening for receiving the generated inflating gas upon activation of the inflator. High loads, that is, great amounts of force, are exerted on the airbag and the module housing particularly during the initial snap inflation stage of inflator activation. Because of this, secure coupling of the airbag to the module housing is important.

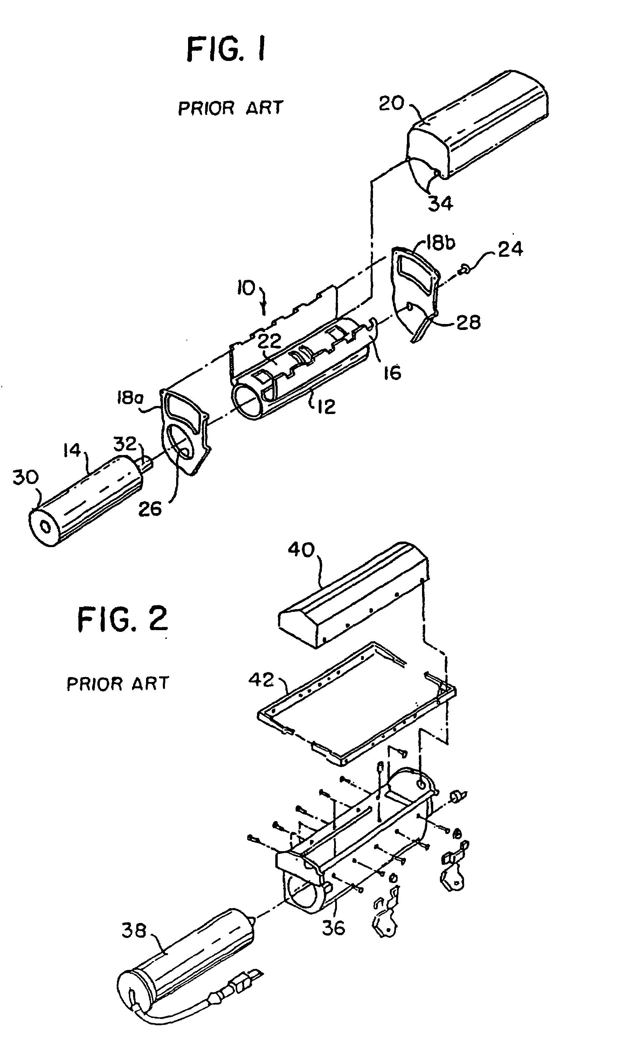

It is generally desirable to reduce the number of fasteners in an airbag system or assembly. Typically, a passenger airbag module, such as the prior art extruded aluminum Hsg. module housing shown in Fig. 1, is assembled using a plurality of fasteners. The assembly 10 of Fig. 1 includes a reaction canister 12, an inflator 14, a reaction canister body part 16, end caps 18a and 18b, a folded airbag 20, a diffuser plate 22, and a nut 24. A circular opening 26 is provided in end cap 18a and a smaller keyed opening 28 is provided in the end cap 18b. A flange 30 is provided on one end of the inflator 14 and a threaded key stud 32 is provided on the other end thereof. The size of the opening 28 of the end cap 18b is such as to allow the inflator stud 32 to be inserted therein with the inflator flange 30 mating with the opening 26 in the end cap 18a. The diffuser plate 22 supports the folded airbag 20. The open mouth of the airbag 20 is restrained by dowels 34. The nut 24, which is screwed on the stud 32 of the inflator 14, and four fasteners, which attach the end caps 18a and 18b to the reaction canister 12, hold the assembly together. Thus, in Fig. 1 a total of five (5) fasteners are employed to hold the assembly together.

There are many situations where it is desirable to surround the inflator, which is positioned within the module housing, with a retainer tube to help control gas flow to the airbag, contain the pressure, and protect the airbag. The aluminum extruded housing airbag module construction shown in Fig. 1 addresses these problems by utilizing airbag retainer channels and hollow sections. There are many situations, however, where it may be desirable or cost effective to use a stamped steel module housing, such as the prior art typical steel housing assembly shown in Fig. 2.

The assembly of Fig. 2 includes a stamped steel Hsg. reaction canister 36, an inflator 38, an airbag 40, and an airbag retaining ring 42. Seventeen (17) fasteners are utilized in the assembly of Fig. 2. Most of the fasteners are required for the attachment of the airbag 40 to the reaction canister 42.

Competition in the airbag industry is driving down the price of airbag modules. To be competitive manufacturers must find ways, while maintaining reliability, to produce low cost airbag modules. Three of the best ways to reduce cost are: 1. minimize the number of parts and fasteners; 2. design for easy assembly; and 3. use low cost construction materials. Stamped steel, which, typically, is the lowest cost material for fabrication of structural airbag module components, has been used for airbag module construction, as mentioned above. Stamped steel designs, however, typically, have been labor intensive, requiring multiple fasteners, as shown in Fig. 2. Extruded aluminum designs, as shown in Fig. 1, typically are simpler and easier to assemble but still require multiple fasteners. The extruded aluminum designs also become expensive when multiple secondary operations are required on the extrusion.

A further prior art airbag module (on which the preamble of claim 1 is based) is disclosed in Patent US 4,191,392. The module includes a cylindrical inflator which is accommodated in a diffuser tube positioned in an open ended loop of an airbag. Adjacent outer portions of the diffuser and airbag loop are sandwiched between reinforcing plates by studs, outer threaded portions of which project through holes in a module housing and are held there by nuts.

There exists a need and a demand for improvement in the construction and assemblage of airbag module housings to reduce the technological gap that exists in respect of the number of parts and fasteners that are required in the assembly of extruded aluminum and stamped steel airbag module housings.

It is an object of the invention to provide a simplified airbag module housing arrangement.

Another object of the invention is to provide a reliable airbag module in which the number of parts and fasteners are minimized, that is easy to assemble, and which uses low cost construction materials.

A further object of the invention is to provide a stamped steel airbag module housing arrangement that is simple, inexpensive, reliable and easy to assemble.

The invention, as defined in claim 1, consists of a simplified stamped steel airbag module construction that requires only one fastener to complete the assembly. Current production stamped steel modules, as indicated in Fig. 2, have 10 to 20 parts which include multiple fasteners. This invention, which is specifically intended to be used with a stamped steel module construction, requires an inflator that can be used as a structural member, specifically an axial tension member.

The invention, in particular, features a diffuser/retainer tube having multiple T-tabs which interlock with the module housing. The T-tabs, which are formed as part of the diffuser/retainer tube (see Figs. 13 and 14), are unique in that they:
1. Prevent bag snap induced axial rotation of the diffuser/retainer tube by interlocking with the module housing (prior art uses fasteners to solve this problem).
2. Simplify and foolproof the cushion attachment process. The diffuser/retainer tube is simply inserted into the cushion and the T-tabs are snapped through small holes in the loop of the cushion. Because of the T-tab geometry, the cushion remains attached to the diffuser/retainer tube during installation into the module housing. Cushion to diffuser orientation is controlled by offsetting one of the T-Tabs.
3. Allow simple cushion construction methods.

The various features of novelty which characterize the invention are pointed out with particularity in the claims annexed to and forming a part of this specification. For a better understanding of the invention, its operating advantages, and specific objects attained by its use, reference is made to the accompanying drawings in which preferred embodiments of the invention are illustrated.

With this description of the invention, a detailed description follows with reference being made to the accompanying figures of drawing which form part of the specification and of which:
Fig. 1 is illustrative of a prior art airbag extruded aluminum module housing assembly;
Fig. 2 is illustrative of a prior art stamped steel airbag module housing assembly;
Fig. 3 is a perspective view of an assembled simplified stamped steel air bag module that is in general accordance with an embodiment of the invention;
Fig. 4 is a fragmented perspective view illustrating the function of multiple T-tabs which interlock the diffuser/retainer tube with the module housing in the invention embodiment shown in Fig. 3; and
Fig. 5 is an exploded isometric view that illustrates the assembly of the components of the simplified stamped steel air bag module that is shown in Fig. 3.

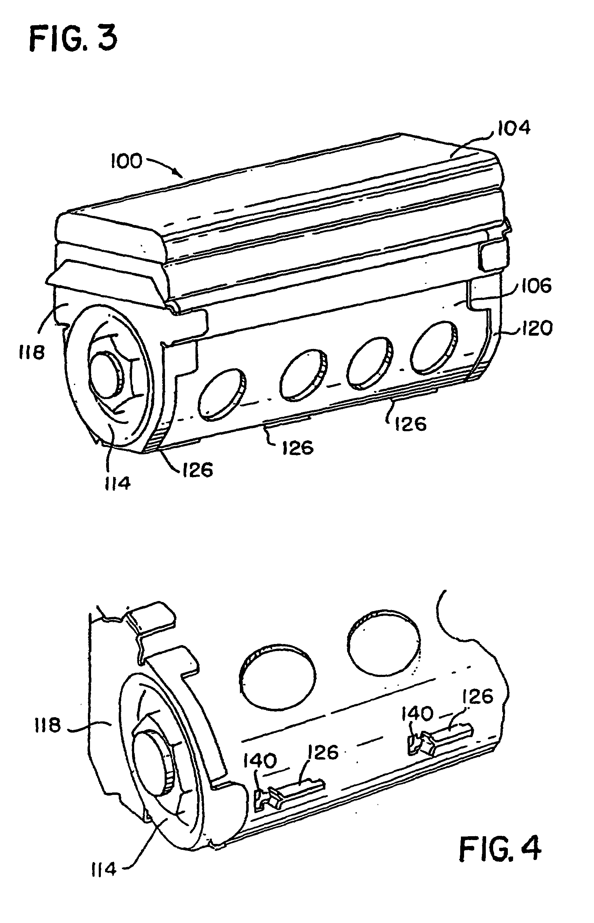

In Fig. 3 there is illustrated an assembled simplified stamped steel airbag module 100 that is in general accordance with an embodiment of the invention. This embodiment of the invention requires only one fastener to complete the assembly, and that is further characterized in that the total number of module parts is reduced to six, excluding a decorative cover.

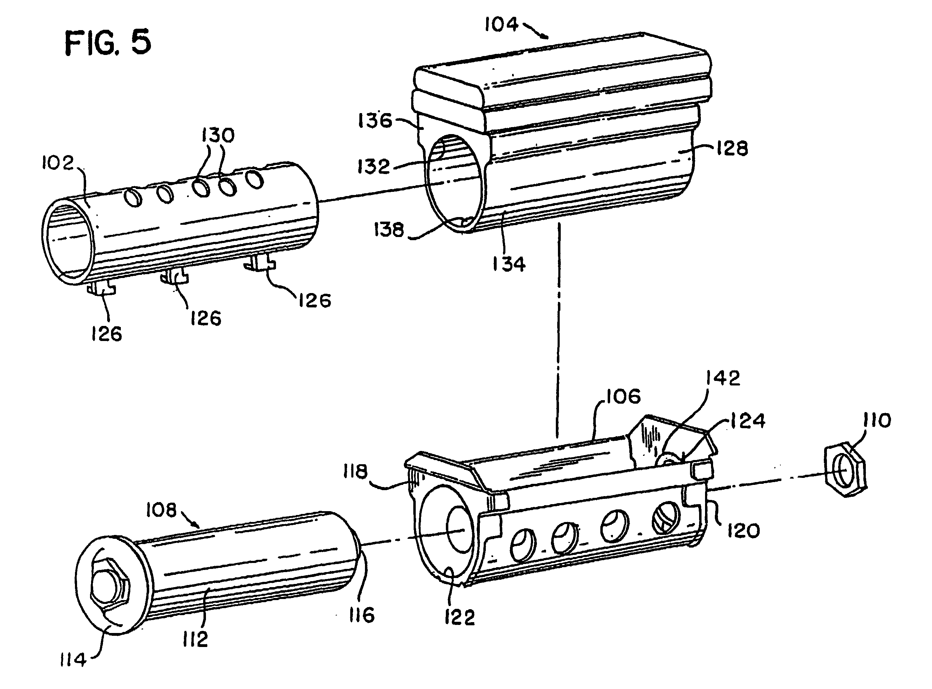

The module parts, as best seen in the exploded view of Fig. 5, include a diffuser/retainer tube 102, an airbag or cushion assembly 104, a module housing 106, and a fixed abutment, specifically an inflator/adapter cup assembly 108, with a single fastener comprising a nut 110.

The inflator/adapter cup assembly 108 includes an elongated gas generator or inflator 112 and an adapter cup 114. The adapter cup 114 can be attached to the inflator 112 in any suitable manner, as for example, with screw threads, by a locking ring, or a crimping operation. The adapter cup 114 may be dispensed with if the inflator 112 already has a flange which is formed integrally with the inflator.

The fastener nut 110 is attached by screw threads to a stud 116 that is formed on the inflator 112, integrally with the end thereof that is remote from the adapter cup 114, as indicated in Fig. 5.

The module housing 106 is formed of parts that together constitute a unity and includes an endwall or plate 118 at one end and an endwall or plate 120 at the other end. When the parts of module housing 106 are in assembled relation, an aperture 122 in the endwall 118 is closed by the adapter cup assembly 108, and an aperture 124 in the endwall 120 is closed by the stud 116.

As shown in Figs. 4 and 5, the diffuser/retainer tube 102 includes multiple T-tabs, each of which is designated by reference numeral 126. The T-tabs 126 are axially spaced apart and formed as part of the diffuser/retainer tube 102. In the assembled module 100 the multiple T-tabs 126 interlock the diffuser/retainer tube 102, the cushion assembly 104, and the module housing 106.

In the cushion assembly 104, the airbag or cushion 128 is in a compacted or stored condition, during periods prior to deployment, proximate a side of the diffuser/retainer tube 102 containing at least one aperture such as the apertures designated by reference numeral 130 in Figs. 13 and 14. The cushion 128 includes an open end, designated 132, that is disposed about diffuser/retainer tube 102 to receive the gas for the inflation thereof that is produced by the inflator 112. Extending from the open end 132 of the cushion 128 is a loop 134 that is sized to envelop the tubular, that is, the cylindrically shaped diffuser/retainer tube 102. Included at each end of the loop 134 is a panel 136 that is formed integrally with the cushion 128 and the loop 134 and matches the curvature of the associated end of the cylindrically shaped diffuser/retainer tube 102.

Referring to Fig. 5, the module 100 is easily assembled in the following sequence. The diffuser/retainer tube 102 is simply inserted into the cushion assembly 104 and the T-tabs 126 are snapped through small spaced holes 138 in the loop 134 of the cushion 128 of the cushion assembly 104. The diffuser/retainer tube 102 is positioned into the cushion assembly 104 where the T-tabs 126 are inserted through the holes 138 in the loop 134.

The diffuser/retainer tube/cushion assembly 102/104 is then inserted into the module housing 106 where the T-tabs 126 interlock with mating axially spaced "T" slots 140 in the module housing 106, as illustrated in Fig. 4. It is noted that because of the geometry of the T-tabs 126, the cushion assembly 104 remains attached to the diffuser/retainer tube 102 during the installation into the module housing 106.

Orientation of the cushion assembly 104 to the diffuser/retainer tube 102 is controlled by offsetting one of the T-tabs 126, that is, as shown in Fig. 5, positioning the center T-tab 126 closer to the T-tab 126 that is to the left thereof than the T-tab 126 that is to the right. The holes 138 in the loop 134 and the "T" slots 140 in the module housing 106 are similarly shifted. With such shifting in the relative positions of the T-tabs 126, the holes 138 and the "T" slots 140, there is only one positional relationship of the diffuser/retainer tube 102, the loop 134 of cushion 128 and the module housing 106 at which the T-tabs 126 will interlock with the "T" slots 140.

Initially, the interlocking action occurs when the diffuser/retainer tube 102 is shifted axially about 3 mm, and permanently, when the adapter cup assembly 108 is inserted into the module housing 106 and attached by screwing the nut 110, the fastener, to the stud 116 on the other end of the inflator 112. This puts the inflator 112 in tension causing inflator/adapter cup assembly 108 to compress the diffuser/retainer 102 against the opposite endwall 120 of the module housing 106 where it is positioned by a circular rib 142.

Since the inflator 112 is attached to both endwalls 118 and 120 of the module housing 106 and the diffuser/retainer tube 102 surrounds the inflator 112, the attachment of the cushion assembly 104, and thereby the cushion 128, is very robust and reliable.

Thus, in accordance with the invention, there has been provided a unique airbag module arrangement that is particularly suited for stamped steel construction, is reliable, easy to assemble, requires only one fastener, and reduces the total number of module parts to six, excluding a decorative cover.

## Claims

1. A passenger airbag module comprising
a diffuser or retainer tube (102) having a side that contains at least one aperture (130) and into which tube gas generator means (108) may be inserted, said gas generator means (108) being of the type responsive to a control signal, for generating gas to inflate an airbag means (128), and
inflatable means responsive to the gas, for protecting, when activated, an occupant of a vehicle comprising a cushion assembly (104), said cushion assembly (104) having a gas inlet opening with a loop (134) extending therefrom that is sized to envelop said tube (102), said cushion assembly (104) being disposed in a compacted or stored condition prior to deployment with said gas inlet opening proximate said side of said tube (102) that contains at least one aperture (130), and said loop (134) enveloping said tube (102), said tube (102) being positioned in said cushion assembly (104);
the module further comprising a module housing (106) into which said tube (102) and cushion assembly (104) is inserted,
**characterised in that**:
said tube (102) includes at least one tab (126) that protrudes outwardly from a side thereof remote from said at least one aperture (130) at a position that is intermediate the length of said tube (102), and wherein said at least one tab (126) is inserted through at least one small hole (138) that is provided in the loop (134) of said cushion assembly (104),
said module housing (106) has at least one slot (140) through which said at least one tab (126) is inserted; and
said at least one tab (126) interlocks with the at least one slot (140) in said module housing, which interlocking occurs when said tube (102) is shifted axially with respect to said module housing (106).

2. An airbag module according to claim 1 wherein the or each tab (126) is formed as part of said tube (102).

3. An airbag module according to claim 1 or 2, wherein said tube (102) includes multiple tabs (126).

4. An airbag module according to claim 3, wherein said multiple tabs (126) are axially spaced along the length of said tube (102).

5. An airbag module according to claim 4, wherein multiple holes (138) provided in said loop (134), and multiple slots (140) provided in said module housing (106) are axially spaced with the same spacing pattern as the spacing of said tabs (126) along the length of said tube (102).

6. An airbag module according to claim 5, wherein orientation of said cushion assembly (104) with respect to said tube (102) is controlled by offsetting one of said tabs (126).

7. An airbag module according to any preceding claim, wherein said cushion assembly (104) in addition to said loop (134) and said at least one small hole (138) therein includes at each end of said loop (134) a panel (136) that is formed integrally therewith that matches the curvature of the associated end of said tube (102).

8. An airbag module according to any preceding claim, wherein said tube (102) and said module housing (106) are made of stamped steel.

9. An airbag module according to any preceding claim, wherein said gas generator means (108) includes an elongated inflator (112) having a threaded stud (116) at a first end and a fixed abutment (114) at a second end, and
wherein said module housing (106) includes first and second endwalls (118, 120) which are opposed and each of which have an aperture (122,124),
wherein, when the parts of said module housing (106) are in assembled relation, said aperture (124) of said first endwall (120) is closed by said inflator threaded stud (116) and said aperture (122) of said second endwall (118) is closed by said abutment (114), and
wherein the parts of said module housing (106) are maintained in assembled relation by a single fastener comprising a nut (110) screwed on the portion of said inflator stud (116) that extends through said first endwall (120) of said module housing (106) with the spacing between said endwalls (118, 120) being such relative to the length of said inflator (112) that this causes said abutment (114) to compress said tube (102) against said first endwall (120) and to place said inflator (112) under tension.

10. An airbag module according to claim 9, wherein said fixed abutment at the second end of said inflator (112) comprises an adapter cup (114) that is fixedly attached thereto.

11. An airbag module according to claim 10, wherein said adapter cup (114) is attached to the second end of said inflator (112) in any suitable manner such as by screw threads, a locking ring, or a crimping operation.

12. An airbag module according to claim 9, wherein said fixed abutment at the second end of said inflator (112) is an integrally formed flange.

13. An airbag module according to any preceding claim wherein the or each tab (126) is a T-tab and the or each slot (140) is a T-slot.

## Patentansprüche

1. Insassenairbagmodul mit
einem Diffusor- oder Halterungsrohr (102), welches eine Seite hat, die wenigstens eine Öffnung (130) enthält, und in welches Rohr Gaserzeugereinrichtungen (108) eingefügt werden können, wobei diese Gaserzeugereinrichtungen (108) von dem Typ sind, der auf ein Steuersignal anspricht, zur Erzeugung von Gas zum Aufblasen einer Airbageinrichtung (128) und
einer aufblasbaren Einrichtung, die auf das Gas anspricht, zum Schützen eines Insassen eines Fahrzeugs bei Aktivierung mit einer Kissenanordnung (104), wobei diese Kissenanordnung (104) eine Gaseinlaßöffnung mit einer Schleife (134) umfaßt, die sich von dort aus erstreckt und so bemessen ist, daß sie das Rohr (102) einhüllt, die Kissenanordnung (104) vor der Entfaltung mit der Gaseinlaßöffnung, die der Seite des Rohrs (102), die wenigstens eine Öffnung (130) enthält, am nächsten liegt, sich in einem verdichteten oder gespeicherten Zustand befindet und die Schleife (134) das Rohr (102) umhüllt und das Rohr in dieser Kissenanordnung (104) angeordnet ist,
wobei das Modul weiterhin ein Modulgehäuse (106) umfaßt, in welches die Rohr (102)- und Kissenanordnung (104) eingesetzt ist,
**dadurch gekennzeichnet, daß**
das Rohr (102) wenigstens eine Zunge (126) einschließt, die nach außen von einer Seite derselben entfernt von der wenigstens einen Öffnung (130) inmitten der Länge des Rohres (102) vorspringt und bei dem die wenigstens eine Zunge (126) durch wenigstens ein kleines Loch (138) eingesetzt ist, welches in der Schleife (134) der Kissenanordnung (104) vorgesehen ist,
das Modulgehäuse (106) wenigstens einen Schlitz (140) hat, durch welchen die wenigstens eine Zunge (126) eingesetzt ist, und
die wenigstens eine Zunge (126) mit dem wenigstens einen Schlitz (140) in dem Modulgehäuse fest zusammengefügt ist, wobei dieses Zusammenfügen auftritt, wenn das Rohr (102) axial in bezug auf das Modulgehäuse (106) verändert wird.

2. Airbagmodul nach Anspruch 1, bei dem die oder jede Zunge (126) als Teil des Rohres (102) ausgebildet ist.

3. Airbagmodul nach Anspruch 1 oder 2, bei dem das Rohr (102) mehrere Zungen (126) einschließt.

4. Airbagmodul nach Anspruch 3, bei dem die mehreren Zungen (126) entlang der Länge des Rohres (102) einen axialen Abstand haben.

5. Airbagmodul nach Anspruch 4, bei dem die mehreren Löcher (138), die in der Schleife (134) vorgesehen sind, und die mehreren Schlitze (140), die in dem Modulgehäuse (106) vorgesehen sind, einen axialen Abstand mit dem gleichen Abstandsmuster wie der Abstand der Zungen (126) entlang der Länge des Rohres (102) haben.

6. Airbagmodul nach Anspruch 5, bei dem die Ausrichtung der Kissenanordnung (104) in bezug auf das Rohr (102) durch Versetzen einer der Zungen (126) gesteuert wird.

7. Airbagmodul nach einem der vorausgehenden Ansprüche, bei dem die Kissenanordnung (104) zusätzlich zu der Schleife (134) und zu dem wenigstens einen kleinen Loch (138) darin in jedem Ende der Schleife (134) eine Platte (136) einschließt, die einstückig mit ihr ausgebildet ist und zu der Krümmung des verbundenen Endes des Rohres (102) paßt.

8. Airbagmodul nach einem der vorausgehenden Ansprüche, bei dem das Rohr (102) und das Modulgehäuse (106) aus gestanztem Stahl bestehen.

9. Airbagmodul nach einem der vorausgehenden Ansprüche, bei dem die Gaserzeugereinrichtung (108) eine längliche Aufblaseinrichtung (112) mit einem Gewindebolzen (116) an einem ersten Ende und ein fixiertes Widerlager (114) an einem zweiten Ende einschließt und
worin das Modulgehäuse (106) erste und zweite Endwände (118, 120) einschließt, die einander gegenüberliegen und jeweils eine Öffnung (122, 124) haben,
worin, wenn die Teile des Modulgehäuses (106) montiert sind, die Öffnung (124) der ersten Endwand (120) durch den Schraubbolzen (116) der Aufblaseinrichtung verschlossen ist und die Öffnung (122) der zweiten Endwand (118) durch das Widerlager (114) verschlossen ist, und
worin die Teile des Modulgehäuses (106) in montierter Beziehung durch eine einzige Befestigungseinrichtung gehalten werden, welche eine Mutter (110) umfaßt, die auf den Abschnitt des Aufblaseinrichtungsbolzens (116) aufgeschraubt ist, der sich durch die erste Endwand (120) des Modulgehäuses (106) erstreckt, wobei der Abstand zwischen den Endwänden (118, 120) in bezug auf die Länge der Aufblaseinrichtung (112) so ist, daß dies bewirkt, daß das Widerlager (114) das Rohr (102) gegen die erste Endwand (120) zusammendrückt und die Aufblaseinrichtung (112) unter Spannung setzt.

10. Airbagmodul nach Anspruch 9, bei dem das fixierte Widerlager an dem zweiten Ende der Aufblaseinrichtung (112) einen Adapterbecher (114) umfaßt, der daran befestigt ist.

11. Airbagmodul nach Anspruch 10, bei dem der Adapterbecher (114) an das zweite Ende der Aufblaseinrichtung (112) in irgendeiner geeigneten Weise, wie durch Schraubgewinde, einen Verankerungsring oder Crimpen befestigt ist.

12. Airbagmodul nach Anspruch 9, bei dem das fixierte Widerlager an dem zweiten Ende der Aufblaseinrichtung (112) ein einstückig ausgebildeter Flansch ist.

13. Airbagmodul nach einem der vorausgehenden Ansprüche, bei dem die oder jede Zunge (126) eine T-Zunge ist und der oder jeder Schlitz (140) ein T-Schlitz ist.

## Revendications

1. Module d'airbag pour passager, comprenant :
- un tube diffuseur ou de retenue (102) ayant un côté qui contient au moins une ouverture (130) et dans lequel on peut introduire des moyens générateurs de gaz tubulaires (108), lesdits moyens générateurs de gaz (108) étant du type réagissant à un signal de commande afin d'engendrer du gaz pour gonfler des moyens formant airbag (128), et
- des moyens gonflables réagissant aux gaz afin de protéger, lorsqu'ils sont activés, un occupant d'un véhicule, comprenant un ensemble à coussin (104), ledit ensemble à coussin (104) ayant une ouverture d'entrée de gaz avec une boucle (134) qui s'en étend et dont la taille est propre à envelopper ledit tube (102), ledit ensemble à coussin (104) étant disposé dans une condition compactée ou stockée avant son déploiement, ladite entrée de gaz s'ouvrant à proximité dudit côté dudit tube (102) qui contient au moins une ouverture (130), et ladite boucle (134) enveloppant ledit tube (102), ledit tube (102) étant positionné dans ledit ensemble à coussin (104);
ledit module comprenant en outre un boîtier de module (106) dans lequel sont introduits ledit tube (102) et ledit ensemble à coussin (104), **caractérisé en ce que** :
- ledit tube (102) inclut au moins une languette (126) qui se projette vers l'extérieur depuis un côté de celui-ci éloigné de ladite au moins une ouverture (130) à une position intermédiaire de la longueur dudit tube (102), et dans lequel ladite au moins une languette (126) est introduite à travers un petit trou (138) prévu dans la boucle (134) dudit ensemble à coussin (104),
- ledit boîtier de module (106) comporte au moins une fente (140) à travers laquelle est introduite ladite au moins une languette (126), et
- ladite au moins une languette (126) est interverrouillée avec ladite au moins une fente (140) dans ledit boîtier de module, ledit interverrouillage se produisant lorsque ledit tube (102) est déplacé axialement par rapport audit boîtier de module (106).

2. Module d'airbag selon la revendication 1, dans lequel la languette ou chaque languette (126) est formée en tant que partie dudit tube (102).

3. Module d'airbag selon l'une ou l'autre des revendications 1 et 2, dans lequel ledit tube (102) inclut des languettes multiples (126).

4. Module d'airbag selon la revendication 3, dans lequel lesdites multiples languettes (126) sont espacées axialement le long de la longueur dudit tube (102).

5. Module d'airbag selon la revendication 4, dans lequel de multiples trous (138) prévus dans ladite boucle (134) et de multiples fentes (140) prévues dans ledit boîtier de module (106) sont espacés axialement avec le même schéma d'espacement que l'espacement desdites languettes (126) le long de la longueur dudit tube (102).

6. Module d'airbag selon la revendication 5, dans lequel l'orientation dudit ensemble à coussin (104) par rapport audit tube (102) est commandée en décalant l'une desdites languettes (126).

7. Module d'airbag selon l'une quelconque des revendications précédentes, dans lequel ledit ensemble à coussin (104) inclut, en plus de ladite boucle (134) et dudit au moins un petit trou (138), à chaque extrémité de ladite boucle (134), un panneau (136) formé intégralement avec celle-ci et épousant la courbure de l'extrémité associée dudit tube (102).

8. Module d'airbag selon l'une quelconque des revendications précédentes, dans lequel ledit tube (102) et ledit boîtier de module (106) sont réalisés en acier estampé.

9. Module d'airbag selon l'une quelconque des revendications précédentes, dans lequel lesdits moyens générateurs de gaz (108) incluent un gonfleur allongé (112) comportant un embout fileté (116) à une première extrémité et une butée fixe (114) à une deuxième extrémité, et
dans lequel ledit boîtier de module (106) inclut une première et une deuxième paroi terminale (118, 120) qui sont opposées et dont chacune comporte une ouverture (122, 124),
dans lequel, lorsque les parties dudit boîtier de module (106) sont en relation assemblée, ladite ouverture (124) de ladite première paroi terminale (128) est fermée par ledit embout fileté (116) du gonfleur, et ladite ouverture (122) de ladite deuxième paroi terminale (118) est fermée par ladite butée (114), et
dans lequel les parties dudit boîtier de module (106) sont maintenues en relation assemblée par un élément de fixation unique qui comprend un écrou (110) vissé sur la partie dudit embout de gonfleur (116) qui s'étend à travers ladite première paroi terminale (120) dudit boîtier de module (106), et l'écartement entre lesdites parois terminales (118, 120) étant ainsi choisi par rapport à la longueur dudit gonfleur (112) que cela amène ladite butée (114) à comprimer ledit tube (102) contre ladite première paroi terminale (120) et à mettre ledit gonfleur (112) sous tension.

10. Module d'airbag selon la revendication 9, dans lequel ladite butée fixe à la deuxième extrémité dudit gonfleur (112) comprend une coupelle d'adaptateur (114) attachée de manière fixe sur elle-même.

11. Module d'airbag selon la revendication 10, dans lequel ladite coupelle d'adaptateur (114) est attachée à la deuxième extrémité dudit gonfleur (112) d'une quelconque manière appropriée, comme au moyen de pas de vis, d'une bague de blocage, ou d'une opération de sertissage.

12. Module d'airbag selon la revendication 9, dans lequel ladite butée fixe à la deuxième extrémité dudit gonfleur (112) est une bride formée de façon intégrale.

13. Module d'airbag selon l'une quelconque des revendications précédentes, dans lequel la languette ou chaque languette (126) est une languette en forme de T, et la fente ou chaque fente (140) est une fente en forme de T.
